**Europäisches Patentamt**

(19) **European Patent Office**

**Office européen des brevets**

(11) Veröffentlichungsnummer: **0 035 062**
**B1**

(12) **EUROPÄISCHE PATENTSCHRIFT**

(45) Veröffentlichungstag der Patentschrift:
08.06.83

(21) Anmeldenummer: **80107710.8**

(22) Anmeldetag: **08.12.80**

(51) Int. Cl.³: **A 23 K 1/00**, A 23 K 1/06,
A 23 K 1/08

(54) Für Menschen und Tiere geeignetes Konzentrat aus Hefeflüssigkeit und seine Verwendung; Verfahren zur Herstellung des Konzentrats.

(30) Priorität: **27.02.80 DE 3007383**

(43) Veröffentlichungstag der Anmeldung:
**09.09.81 Patentblatt 81/36**

(45) Bekanntmachung des Hinweises auf die Patenterteilung:
**08.06.83 Patentblatt 83/23**

(84) Benannte Vertragsstaaten:
**AT BE CH DE FR GB LI NL**

(56) Entgegenhaltungen:
**WO-A-79/00183**
**DE-A-1 492 787**
**DE-A-1 792 016**
**DE-A-2 512 258**
**DE-B-1 061 608**
**DE-B-2 629 268**
**DE-B-2 643 093**
**DE-C-174 864**
**FR-A-921 734**

(73) Patentinhaber: **Schanze, Rudolf, Friedenstrasse 43,
D-8034 Unterpfaffenhofen (DE)**

(72) Erfinder: **Schanze, Rudolf, Friedenstrasse 43,
D-8034 Unterpfaffenhofen (DE)**

(74) Vertreter: **Kraus, Walter, Dr. et al, Patentanwälte Dres.
Kraus & Weisert Irmgardstrasse 15,
D-8000 München 71 (DE)**

ACTORUM AG

## Für Menschen und Tiere geeignetes Konzentrat aus Hefeflüssigkeit und seine Verwendung; Verfahren zur Herstellung des Konzentrats

Die Erfindung betrifft ein Verfahren zur Herstellung eines für Menschen und Tiere geeigneten Konzentrats aus Hefeflüssigkeit sowie ein für Menschen und Tiere geeignetes Konzentrat aus Hefeflüssigkeit und seine Verwendung.

Das erfindungsgemässe, neue für Menschen und Tiere geeignete Konzentrat aus Hefeflüssigkeit besitzt einen hohen Nährwert.

Hefeflüssigkeiten mit einem Trockensubstanzgehalt im Bereich von etwa 8 bis 25 Gew.-% fallen auf vielen Gebieten an. So fällt bei der Bierbereitung neben den Biertrebern als weiteres Nebenprodukt Bierhefeflüssigkeit an. Hefen, insbesondere Bierhefen, enthalten in ihrer Trockensubstanz eine Reihe hochwertiger, biologisch sehr wertvoller Nährstoffe, insbesondere weisen sie einen hohen Eiweissgehalt auf.

In der folgenden Tabelle I werden die Trockenmassenanteile von einigen Hefen in Prozent, bezogen auf 100% Trockenmasse (TS), aufgeführt.

Tabelle I
Zusammensetzung verschiedener Hefen in Prozent, bezogen auf 100% Trockenmasse (Durchschnittswerte)

| Bier-<br>hefe | Alkan-<br>hefe | Methan-<br>hefe | Torula-<br>hefe | Candida-<br>hefe | |
|---|---|---|---|---|---|
| Inhaltsstoffe | | | | | |
| Rohproteine | 51,0 | 69,0 | 73,0 | 47,0 | 45,0 |
| Lysin | 3,9 | 5,3 | 4,6 | 3,6 | 7,6 |
| Methionin | | | | | |
| + Cystin | 1,3 | 1,7 | 2,3 | 1,5 | 2,3 |
| Rohfett | 2,7 | 2,2 | 9,0 | 3,0 | 1,0 |
| Rohasche | 8,6 | 8,1 | 8,0 | 8,0 | 5,0 |
| Calcium | 0,25 | 0,3 | 0,1 | 0,4 | – |
| Phosphor | 1,7 | 1,5 | 2.3 | 1,6 | – |
| Natrium | 0,25 | 0,1 | 1,5 | 1,7 | – |
| verdaul. Eiw. | 46,4 | 58,5 | 58,4 | 38,0 | 40,0 |
| Gesamtnährstoff | | | | | |
| (f. Schweine) | 825 | 725 | 790 | 675 | 665 |

Die Hefen, insbesondere die Bierhefen, besitzen weiterhin relativ sehr hohe Anteile an Vitaminen des B-Komplexes, organischen Mineral- und Spurenstoffen, Enzymsubstanzen und eine Reihe weiterer Wirkstoffe, die analytisch noch nicht genauestens identifiziert wurden, jedoch in Tierversuchen wirksam sind und als UG-Faktoren (Unidentified-Growth-Faktoren) beschrieben werden.

Nachteilig an Hefen ist ihr eigentümlicher Geschmack. Bierhefe enthält zusätzlich noch bittere Stoffe, die den Geschmack dieser Hefe beeinträchtigen. Hefen weisen ausserdem unterschiedlich hohe Nukleinsäuregehalte auf, was ebenfalls von Nachteil ist. Die Nukleinsäuregehalte limitieren beispielsweise beim Menschen den täglichen Rationsanteil von Bierhefen auf maximal 10 g.

Hefen und Bierhefen wurden in der Vergangenheit entweder verworfen oder in flüssiger Form verfüttert.

Die Verfütterung von Hefeflüssigkeit ist jedoch mit Nachteilen verbunden. Befinden sich die zu fütternden Tiere nicht in der Nähe des Ortes, wo die Hefeflüssigkeit anfällt, muss die Hefeflüssigkeit transportiert werden. Da die Hefeflüssigkeit nur ca. 8 bis 25 Gew.-% Trockenmasse enthält, bedeutet dies, dass grosse Massen an Wasser transportiert werden müssen, was in vielen Fällen, insbesondere dann, wenn die zu fütternden Tiere von dem Ort, wo die Hefeflüssigkeit anfällt, weit sind.

entfernt gehalten werden, mit hohen Kosten verbunden ist, so dass ein solcher Transport unwirtschaftlich ist.

Hefeflüssigkeit enthält in vielen Fällen weiterhin noch lebende Hefezellen, was mit sich bringt, dass die Tiere nur begrenzte Mengen an Hefeflüssigkeit als Futter erhalten können. Andererseits besteht die Gefahr, dass sich die Hefeflüssigkeit zersetzt und verdirbt. In der Literatur werden verschiedene Verfahren für die Aufbereitung von Hefeflüssigkeit beschrieben.

In der DE-B-2 629 268 wird ein Futtermittel für Monogastren auf der Grundlage von Bierhefe vorgeschlagen, das zusätzlich zu der Bierhefe noch eine organische Säure enthält. Dadurch wird die Resorbierbarkeit der Hefeflüssigkeit bei den Tieren verbessert.

In der DE-B-1 931 348 wird ein Verfahren zur Herstellung eines Beifuttermittels für Vieh aus Bierhefe beschrieben, bei dem die Bierhefe einer Schnellautolyse unterworfen wird. Dieses Autolysat kann dem Futter in einem Anteil von 25% zugesetzt werden, was eine bessere Ausnutzung der Hefeflüssigkeit ermöglicht.

Die oben beschriebenen Verfahren besitzen den Nachteil, dass Produkte erhalten werden, die noch einen hohen Wassergehalt aufweisen, oder dass Produkte erhalten werden, die schnell verderbbar sind.

In der Vergangenheit sind die Hefeflüssigkeiten in den meisten Fällen in kleineren Brauereien angefallen, die über dem Land verstreut liegen. Daher liess sich in der Vergangenheit die Hefeflüssigkeit für Fütterungszwecke recht gut ausnutzen. Infolge zunehmender Zentralisierung des Brauwesens und häufigen Anfalls innerhalb von Ballungsgebieten ohne Landwirtschaft fallen jetzt in vielen Brauereien zwischen 10 und 200 t/Woche Rohhefe an. Die Beseitigung der Rohhefeflüssigkeit stellt daher heute eine grosse Schwierigkeit dar. Das Ablassen der Rohhefeflüssigkeit in den Abwasserkanal bringt Umweltbelastungen mit sich. Die Rückverteilung an die Tierhalter wird problematisch, da sich, wie oben ausgeführt, lange Transportwege bei der Hefe nicht lohnen.

Man ist auch schon dazu übergegangen, Bierhefeflüssigkeit zu trocknen und in dieser Form zu vermarkten.

In diesem «klassischen» Hefeverarbeitungsverfahren wird die Rohhefeflüssigkeit zuerst gereinigt und entalkoholisiert. Die rohe Bierhefeflüssigkeit mit einem Trockengehalt von 9 bis 12% wird durch Eindampfen auf Trockensubstanzgehalte zwischen 16 und 28% vorkonzentriert. Dieses Konzentrat wird als Nassgut einem Walzentrockner zugeführt, der als «Tauchwalze» ausgebildet ist. Der beheizbare, sich drehende Zylinder passiert zunächst die Tauchwanne, wodurch die Walzenbahn mit dem Nassgut behaftet wird. Durch Hitze dampft das Wasser aus. Der entstehende trockene Hefefilm wird unmittelbar vor dem weiteren Eintauchen durch ein Messer abgehoben. Die so gewonnene getrocknete Hefe besitzt eine Trockensubstanz von 88 bis 92%.

Dieses bekannte Verfahren besitzt den Nachteil, dass der Energieverbrauch zur Wasserentfernung bei den einzelnen Trocknungs- und Entwässerungsstufen sehr hoch ist und dadurch die Kosten für die Hefetrocknung sehr hoch sind. In der ersten Trocknungsstufe, bei der stark wasserhaltige Produkte konzentriert werden, liegen thermisch und damit kostengünstigere Verhältnisse vor als in der zweiten Trocknungsstufe, der Endtrocknungsstufe, bei der das konzentrierte Nassgut in das Trockenprodukt überführt wird.

In der folgenden Tabelle II werden der Energieverbrauch und der Kostenaufwand für 1 kg Wasserverdampfung angegeben.

Tabelle II

| | Durchschnittliche Wassergehalte (%) im technischen System | | Energieverbrauch je kg Wasserentfernung | | Kosten in Pfennig je kg Wasserentfernung | |
|---|---|---|---|---|---|---|
| | Eingang | Ausgang | kg Dampf | kcal | Bereich | Durchschnittswerte |
| Technisches System | | | | | | |
| Eindampfung | 5–15 | 16–28 | 0,12–0,30 | 100–200 | 0,9–1,6 | 1,3 |
| Konzentrator | 5–15 | 25–50 | 0,12–0,25 | | | |
| Tauchwalze | 15–28 | 85–95 | 1,30–1,60 | 885–1100 | 12–19 | 15 |
| Auftragswalze | 35–60 | 88–98 | 1,20–1,50 | 800–1000 | | |
| Zerstäubungstrockner (Turm) | 25–52 | 95–99 | 1,50–2,50 | 1000–1700 | 12–25 | 18 |

Die Bereiche der einzelnen Werte ergeben sich aus den unterschiedlichen technischen Systemen sowie aufgrund der Unterschiede in den eingesetzten Primärenergien (Schweröl, Erdgas, Leichtöl, usw.).

Anhand der obigen Werte kann man die Kostenbelastung für die derzeit mögliche Trocknung von Bierhefe abschätzen. Unter Berücksichtigung der in der Aufstellung nicht enthaltenen zusätzlichen Kosten zur Deckung der Investitionen (Gebäude, Maschinen, usw.) wird ersichtlich, dass eine ausreichende Abgeltung für den Rohstoff Bierhefe heute kaum mehr möglich ist.

In der folgenden Tabelle III wird die klassische Bierhefetrocknung näher erläutert.

Tabelle III

| | Mengenverhältnisse/kg kg Trockensubstanz/100 kg | | | Kostenverhältnisse /DM pro 100 kg TS | | |
|---|---|---|---|---|---|---|
| techn. mögliche Vorkonzentrier. | 16 | 22 | 28 | 16 | 22 | 28 |
| Einsatz Rohhefe | 910 | 910 | 910 | – | – | – |
| Eindampf. auf = Wasserentfern. | 625 | 455 | 360 | | | |

Tabelle III (Fortsetzung)

| techn. mögliche Vorkonzentrier. | Mengenverhältnisse/kg  kg Trockensubstanz/100 kg | | | Kostenverhältnisse /DM pro 100 kg TS | | |
|---|---|---|---|---|---|---|
| | 16 | 22 | 28 | 16 | 22 | 28 |
| kg bzw. (×0,013) DM Endtrockn. auf = Wasserentfern. | 285 110 | 455 110 | 550 110 | 3,71 | 5,92 | 7,15 |
| kg bzw. (×0,15) DM Kosten/ | 515 | 345 | 250 | 77,25 | 51,75 | 37,50 |
| Wasserentfernung | | | | 80,96 | 57,67 | 44,65 |

Es ist anhand der Mengen der Wasserentfernung je Trocknungsstufe und der entstehenden Kosten leicht einzusehen, dass es wichtig ist, in die Endtrocknung mit hohen Trockensubstanzgehalten aus dem Nassgut einzugehen. Dies entscheidet über die Wirtschaftlichkeit des Verfahrens, und es ist zugleich Anhalt für eine möglichst günstige thermische Energiebilanz innerhalb der Technik des Verfahrens. Dieser Aspekt bedarf heute und in Zukunft aus der Sicht der Energieeinsparung besonderer Beachtung.

Eine praktische Verwendung der Hefeflüssigkeiten ist somit nur realisierbar, wenn es gelingt, Verfahren zu entwickeln, mit denen aus der Hefeflüssigkeit wertvolle Produkte auf wirtschaftliche Weise gewonnen werden können.

Auch in der Milchindustrie, Stärkeindustrie, Fermentationsindustrie und in der Nahrungsmittelindustrie fallen zahlreiche Neben- und Nachprodukte an, die wertvolle Bestandteile enthalten, allerdings in einer Konzentration, die eine rentable Aufbereitung im allgemeinen nicht ermöglicht.

Beispielsweise fallen in der Milchindustrie Milchzuckermelassen, Permeate und Molken, in der Stärkeindustrie Flüssigkeiten, die Kartoffeleiweiss enthalten, in der Brennerei Schlempen, in der Fermentationsindustrie Vinassen und in der Fleischindustrie Hydrolysate an, die trotz ihrer relativ hohen Trockenmasse verworfen werden.

In der folgenden Tabelle IV sind die Trockenmassegehalte einiger derartiger typischer Neben- und Abfallprodukte aufgeführt.

Tabelle IV

Trockengehalte in %, bezogen auf 100 Teile Flüssigkeit, verschiedener Neben- und Nachprodukte der Industrie

| Milchindustrie | Bereich | Durch- schnittlich |
|---|---|---|
| Milchzuckermelassen | 30–55 | 48 |
| Permeate | 30–65 | 35 |
| Molken | 25–45 | 35 |
| Stärkeindustrie Kartoffeleiweiss- flüssigkeit | 35–40 | 40 |
| Brennerei Schlempen | 6–15 | 10 |
| Fermentationsindustrie Vinassen | 55–70 | 65 |
| Sonstige Industrien eiweisshaltige Hydrolysate (die z.B. bei der Verwertung von Fleisch anfallen) | 45–75 | 50 |

Es wurden verschiedene Verfahren zur Verwertung der genannten Neben- und Nachprodukte vorgeschlagen. Die meisten dieser bekannten Verfahren zur Aufbereitung der oben genannten Produkte besitzen jedoch den Nachteil, dass die Kosten der bei solchen Verfahren gewonnenen nützlichen Produkte so hoch sind, dass die Produkte nicht konkurrenzfähig sind.

Beispielsweise wird in der DE-A-1 803 980 ein Milchaustauschfuttermittel für Kälber vorgeschlagen, bei dem Molkepulver zusammen mit Magermilchpulver verwendet wird.

In der DE-A-2 400 281 wird ein Proteinkonzentrat beschrieben, das aus Schlempen stammende Trockenmasse zusammen mit Trägerstoffen, wie Zuckerschnitzen, Stroh oder Kornmehlen, enthält. In der DE-C-2 643 093 wird ein Verfahren zur Herstellung von Futtermitteln beschrieben, bei dem Getreidestroh, Leguminosenstroh, Maisspindeln oder ihre Gemische und Molke und gegebenenfalls Schlempen oder Bierhefe zusammen vermischt und eingedampft werden.

In der DE-A-2 512 258 wird ein Verfahren zur Herstellung eines Futtermittels aus Schlempe beschrieben, bei dem ein Gemisch aus 0,4 bis 0,9 Volumenteilen Schlempe und 0,6 bis 0,1 Volumenteilen wasserhaltiger Hefe getrocknet wird. Gemäss Seite 3, Absatz 2 der Beschreibung enthalten die Schlempen 90 bis 95% Wasser, was einer Trockenmasse von 10 bis 5% entspricht. Unter der Annahme, dass Hefen Trockenmassengehalte von 9 bis 12% aufweisen, würden diese bekannten Futtermittel über 20% Trockenmasse, die aus Schlempen stammt, enthalten.

Schlempen sind nach dem «Handbuch der Futtermittel», Becker/Nehring, V. Paul Parey 1967, Band III, Seiten 87 ff. bei der Destillation anfallende Rückstände der Maischen und abhängig von den eingesetzten Rohstoffen mehr oder weniger wertvoll. Teils – wie bei Melassen aus Zuckerrüben und Rohrzucker – behindert der hohe Mineralsalzgehalt die Brauchbarkeit, so dass das deutsche Futtermittelgesetz sie als unbrauchbar verwarf. Sie besitzen teilweise, wie Schlempen aus Getreidevergärung, hohe, jedoch unterschiedliche Eiweissanteile, so dass im Gegensatz zu Hefen und Milchnachprodukten unreine und schwer standardisierbare Rohstoffe vorliegen.

Insgesamt sind Schlempen besser für Wiederkäuer geeignet als für monogastrische Tiere.

Im Gegensatz zu den bekannten Futtermitteln sollen die erfindungsgemässen Futtermittel nur unter 20% Trockenmasse enthalten, die aus Schlempen stammt.

Das bekannte Verfahren besitzt weiterhin den Nachteil, dass zur Eindampfung der grossen Flüssigkeitsmengen hohe Energiekosten anfallen.

Der vorliegenden Erfindung liegt die Aufgabe zugrunde, ein Nährkonzentrat aus Hefe und Abfall-, Nach- und Nebenprodukten der Milchindustrie, Stärkeindustrie, der Brennerei, der Fermentationsindustrie und sonstigen Nahrungsmittelindustrien zur Verfügung zu stellen. Erfindungsgemäss soll ein Nährkonzentrat erhalten werden, das eine standardisierte Zusammensetzung aufweist und keinen unangenehmen Geschmack besitzt. Das erfindungsgemässe Nährkonzentrat soll auf einfache und wirtschaftliche Weise erhalten werden können, so dass es mit anderen Nährkonzentraten mit gleichem oder ähnlichem Nährwert konkurrieren kann. Erfindungsgemäss soll weiterhin ein Verfahren zur Herstellung des erfindungsgemässen Nährkonzentrats zur Verfügung gestellt werden, das auf einfache Weise und wirtschaftlich durchgeführt werden kann.

Die erfindungsgemässen Produkte sollen weiterhin gleichbleibende Qualität, einen angenehmen Geschmack, eine ausreichende Haltbarkeit aufweisen, bedarfsgerecht zusammengesetzt und bekömmlich sein.

Gegenstand der Erfindung ist somit ein Verfahren zur Herstellung eines für Menschen und Tiere geeigneten Konzentrats, das dadurch gekennzeichnet ist, dass man eine Hefeflüssigkeit mit oder ohne Zugabe einer Lösung oder Suspension von Neben- und Nachprodukten der Milchindustrie, Stärkeindustrie, industriellen Fermentation und Nahrungsmittelindustrie zu einem Vorkonzentrat mit einer Trockenmasse von 16 bis 50% eindampft, dem Vorkonzentrat geeignete Rohstoffe zumischt, um die Konzentration des Vorkonzentrats in den Bereich von 35 bis 60% Trockenmasse anzuheben, wobei man als geeignete Rohstoffe feste Neben- oder Nachprodukte der Milchindustrie, der Stärkeindustrie, der Brennerei, der Fermentationsindustrie und/oder der Nahrungsmittelindustrie und/oder Stärkeprodukte verwendet, und das erhaltene Reaktionsgemisch bis zu einem Feststoffgehalt über 80% Trockenmasse trocknet, wobei die Vermischung auf solche Weise geschieht, dass ein Nährkonzentrat erhalten wird, welches, bezogen auf 100 Teile Trockenmasse, enthält:

a) 20 bis 60 Teile Trockenmasse, die aus Hefeflüssigkeit stammt, und

b) 30 bis 60 Teile Trockenmasse, die aus Milchnebenprodukten stammt, und

c) 5 bis 25 Teile Trockenmasse, die aus Stärkeprodukten stammt, sowie gegebenenfalls

d) bis zu 15 Teile Trockenmasse, die aus Cellulose und/oder rohfaserreichen Produkten stammt, und/oder

e) bis zu 25 Teile Trockenmasse, die aus Fermentationsprodukten stammt, und/oder

f) bis zu 20 Teilen Trockenmasse, die aus Schlempen, Pulpen oder Hydrolysaten stammt.

Gegenstand der Erfindung ist weiterhin ein für Menschen und Tiere geeignetes Konzentrat aus Hefeflüssigkeit, das dadurch gekennzeichnet ist, dass es, bezogen auf 100 Teile Trockenmasse, enthält:

a) 20 bis 60 Teile Trockenmasse, die aus Hefeflüssigkeit stammt, und

b) 30 bis 60 Teile Trockenmasse, die aus Milchnebenprodukten, vorzugsweise Milchzuckermelassen, Permeaten und/oder Molken, stammt, und

c) 5 bis 25 Teile Trockenmasse, die aus Stärkeprodukten, insbesondere Kartoffelflocken und Getreidemehlen, stammt, sowie gegebenenfalls

d) bis zu 15 Teile Trockenmasse, die aus Cellulose und/oder rohfaserreichen Produkten stammt, und/oder

e) bis zu 25 Teile Trockenmasse, die aus Fermentationsprodukten, insbesondere Vinassen, stammt, und/oder

f) bis zu 20 Teile Trockenmasse, die aus Schlempen, Pulpen oder Hydrolysaten stammt.

Bevorzugt werden als Milchnebenprodukte Milchzuckermelassen, Permeate und/oder Molken, als Stärkeprodukte Kartoffelflocken und Getreidemehle und als Fermentationsprodukte Vinassen verwendet.

Unter «Hefeflüssigkeiten», die erfindungsgemäss eingesetzt werden können, sind allgemein Flüssigkeiten, wie Hefelösungen oder -suspensionen, zu verstehen, die bei industriellen Gärprozessen als Überschuss oder Rückstand aus dem Gärverfahren ausgeschieden werden. Beispiele für Hefeflüssigkeiten sind die zuvor erwähnten Bierhefe-, Alkanhefe-, Methanhefe-, Torulahefe-, Candidahefe- und sonstige Hefeflüssigkeiten, die die in Tabelle I angeführte Zusammensetzung aufweisen. Die Bierhefeflüssigkeiten sind so, wie sie in der Brauerei anfallen, wegen ihres besonders hohen Gehalts an biologischen Wirkstoffen bevorzugt.

Als Lösung oder Suspension von Neben- und Nachprodukten der Milchindustrie, Stärkeindustrie und industriellen Fermentation kann man alle bei derartigen Industrien anfallenden Flüssigkeiten verwenden, die noch Stoffe mit einem Nährwert enthalten.

Beispiele solcher Stoffe sind in der zuvor erwähnten Tabelle IV angegeben.

Beispiele für Neben- und Nachprodukte der Milchindustrie sind Milchzuckermelassen, Permeate und Molken.

Beispiele für Neben- und Nachprodukte der Stärkeindustrie sind die bei der Kartoffelaufbereitung, anfallenden Kartoffelflüssigkeiten, die grosse Mengen an Kartoffeleiweiss enthalten.

Beispiele für im Gärungsgewerbe anfallende Produkte sind Schlempen, die in grossen Mengen als Destillationsrückstand bei der Verarbeitung von pflanzlichen Produkten zu Spritz anfallen. Unter «Schlempe» wird bei der vorliegenden Erfindung der Destillationsrückstand bei der Spritherstellung aus vergärten pflanzlichen Produkten, wie Kartoffeln, Roggen, Weizen, Mais und dergleichen, verstanden. Schlempen aus Getreide oder Kartoffeln werden bevorzugt verwendet.

Andere Beispiele für Rückstände aus der Fermentationsindustrie sind u.a. Vinassen.

Andere Flüssigkeiten, die verwendet werden können, sind Flüssigkeiten, die in der Fleisch- und Fischindustrie anfallen und noch Fleisch- bzw. Fischreste enthalten, und Flüssigkeiten, die bei anderen Nahrungsmittelindustrien, wie bei der Reisindustrie, Süsswarenindustrie usw., anfallen.

Bei dem erfindungsgemässen Verfahren werden zuerst die Hefeflüssigkeiten und gegebenenfalls die Lösung oder Suspension aus dem unstrukturierten Neben- oder Nachprodukt vermischt und bis zu einem Trockenmassengehalt von 16 bis 50% eingedampft.

Bevorzugt erfolgt die Eindampfung in Eindampfungsanlagen, wie sie für die Milchindustrie entwickelt wurden. Bevorzugt werden Fallstrom-Eindampfanlagen verwendet, wie sie in dem Prospekt «Wiegand Partner der Milchindustrie» mit dem Titelbild «Milchbaum nach Volkswirtschaftl. Verlag Kempten» sowie in den Drucksachen dieser Firma T 69/3 und P 73/1 beschrieben werden.

Zur Eindampfung der Flüssigkeit kann man auch Plattenverdampfer verwenden, wie sie für die Milch- und Fruchtsaftbetriebe entwickelt wurden und in der Firmenzeitschrift «Holstein & Kappert Maschinenfabrik Phönix GmbH, Dortmund», Heft 33, 1962/I beschrieben werden. Bei der Eindampfung erhält man ein Vorkonzentrat, das noch gut gehandhabt werden kann.

Die technische Durchführung des Verfahrens muss aus standortsbedingten Gründen dem Standort des Hefeaufkommens anpassbar sein. Bei günstigen Standorten erfolgt so die Eindampfung der Hefeflüssigkeit über Eindampfungsanlagen der Milchindustrie getrennt oder nach Vorvermischung mit den Nebenprodukten. Bei ungünstigen Standorten muss die Hefeflüssigkeit mit den vorhandenen Konzentrierungsanlagen konzentriert werden.

Über die Eindampfung in Milchbetrieben kann Hefe im Bereich von 30 bis 40% Trockenmasse allein oder mit Milchprodukten zu Konzentrat verarbeitet werden. An Standorten bereits vorhandener Hefetrocknungsanlagen muss berücksichtigt werden, dass Konzentrate nur im Bereich von 16 bis 28% Trockenmasse, maximal 30% Trockenmasse, vorliegen.

Die in der Milchindustrie vorhandenen Eindampfersysteme ermöglichen es, diese obere Grenze zu überschreiten und bis an 35 bis 49% TS in der Eindampfung bzw. Vorkonzentration zu steigern. Dieser äusserst vorteilhafte und überraschende Effekt war nicht vorhersehbar und wurde anhand von empirischen Versuchen ermittelt.

Es ist überraschend, dass man bei der Eindampfungsstufe bestimmte, grossvolumig gebaute Eindampfer, die für die milchindustrielle Verarbeitung entwickelt wurden, verwenden kann und damit höhere Konzentrationsleistungen erreichen kann als mit den bisher bekannten speziellen Hefeeindampf- oder Hefetrocknungsanlagen. Damit ist eine beachtliche Kosteneinsparung bei der Eindampfungsstufe realisierbar.

Liegen solche standortgebundenen Vorteile nicht vor, so ist es erfindungsgemäss möglich, sich mit der geringeren Konzentration aus den Hefeverarbeitungsanlagen abzufinden, dafür aber Milchnebenprodukte, insbesondere Milchzuckermelassen und/oder Permeate aus der Milchindustrie, höher als normal üblich zu konzentrieren, was in den Bereich bis von 45 bis 65% Trockenmasse möglich ist, und diese bei der nächsten Stufe zu verwenden.

Die Eindampfung erfolgt bis zu einer Trockenmasse von 16 bis 50%, vorzugsweise 25 bis 45% und am meisten bevorzugt 33 bis 45%, und hängt von der Konzentration der als Ausgangsmaterial verwendeten Flüssigkeiten ab sowie von den verfügbaren Eindampfungsanlagen.

Überraschenderweise wurde weiterhin gefunden, dass man die Hefeflüssigkeit vor der Eindampfung zu einer angereicherten Hefeflüssigkeit konzentrieren kann, wenn man zu der rohen, flüssigen Hefe 0,4 bis 2, vorzugsweise 0,5 bis 1%, Säure, bezogen auf die Gesamtsubstanz, zugibt, das Reaktionsgemisch vermischt und es sedimentieren lässt.

Trennt man das Sediment von dem Serum, so erhält man als Sediment eine Hefeflüssigkeit, die einen Trockenmassengehalt im Bereich von 20 bis 23% aufweist, wenn man eine Hefe mit einem durchschnittlichen Trockenmassengehalt von 11 bis 12% als Ausgangsmaterial verwendet. Das Serum weist einen Trockenmassengehalt im Bereich von 2 bis 8% auf.

Als Säure kann man dieser Ausführungsform des erfindungsgemässen Verfahrens Ameisensäure, Schwefelsäure, Salzsäure, Propionsäure, Phosphorsäure, Essigsäure oder Methylpropionsäure verwenden. Anstelle einer Säure kann man auch Ammoniumpropionat einsetzen. Es war überraschend und hat nicht nahegelegen, dass man durch eine Säurebehandlung eine Konzentrierung der Rohhefe erreichen kann. Dieser Effekt ist in untergärigen Hefen stärker ausgeprägt als in obergärigen.

Die Behandlung mit Säure ermöglicht es daher, die Rohhefen am Ort ihrer Entstehung auf einfache Weise zu konzentrieren. Dadurch werden die Transportkosten gesenkt. Bei diesem Verfahren ist Ameisensäure besonders bevorzugt, weil der Vorteil der Verwendung von Ameisensäure darin besteht, dass diese eine schnelle Sedimentierung ermöglicht und gleichzeitig eine Konservierungswirkung besitzt und während des Trocknungsprozesses weitgehend entfernt wird, ja vielleicht verdampft.

Die bei der Sedimentation erhaltene Hefeflüssigkeit kann dann entweder weiter bis zu einem Feststoffgehalt von maximal 50% konzentriert werden, wobei die Konzentrierung mit oder ohne Zugabe von den oben erwähnten Neben- und Nachprodukten der Milchindustrie, Stärkeindustrie, industriellen Fermentation und Nahrungsmittelindustrie erfolgen kann. Man kann die angereicherte Hefeflüssigkeit auch direkt als Vorkonzentrat verwenden.

Dem Vorkonzentrat, das man durch Eindampfen der Hefeflüssigkeit mit oder ohne Säurebehandlung der Hefeflüssigkeit erhält, mischt man geeignete flüssige oder feste Rohstoffe in einer Menge bei, dass die Trockenmasse des Vorkonzentrats auf 35 bis 60 Gew.-%, vorzugsweise 40 bis 55 Gew.-% und am meisten bevorzugt 45 bis 50 Gew.-%, angehoben wird.

Als geeignete flüssige Rohstoffe kommen alle oben erwähnten Neben- und Nachprodukte der Milchindustrie, Stärkeindustrie, industriellen Fermentation und Nahrungsmittelindustrie in Frage, sofern sie in einer Konzentration vorliegen, dass der Feststoffgehalt des Vorkonzentrats auf den gewünschten Bereich angehoben wird.

Geeignete feste Rohstoffe können beispielsweise sein: Stärkeprodukte, insbesondere Kartoffelflocken, Getreidemehle und Getreideschrote und Sekundastärken.

Das Vermischen erfolgt im allgemeinen vor der Endtrocknung auf der Walze in flüssigem Zustand, wobei dem Vorkonzentrat die Zusätze beigemischt werden.

Das erhaltene Nassgut wird bis zu einem Feststoffgehalt über 80% Trockenmasse, vorzugsweise bis zu einem Feststoffgehalt von 88 bis 98% Trockenmasse und am meisten bevorzugt von 92 bis 96% Trockenmasse, getrocknet.

Die Endtrocknung findet abweichend zur bisherigen Hefetrocknung weder auf Tauchwalzen noch auf Hatmaker-Systemen oder Feinschichtwalzen, sondern auf Walzen mit oberer Auftragung statt. Hier handelt es sich um einen Walzentyp, der die Walzenbahn mittels Zwangsauftragung von oben beaufschlagt und mit Hilfe mehrerer Auftragswalzen und steuerbarer Umdrehungsgeschwindigkeit ermöglicht, eine dicke Schichtauftragung auf der Walzenbahn zu erreichen.

Das Endprodukt geht am abnehmbaren Messer von der Walzenbahn als kompakter Film ab, der es gestattet, aus der nachfolgenden erfindungsgemäss sehr groben Absichtung zu einem kompakten Produkt mit groben Partikeln zu kommen. Dies wird als Granulat bezeichnet.

Diese Partikelbildung ermöglicht es besonders gut, den späteren Verarbeitungsgängen innerhalb der abnehmbaren Weiterverarbeiter gerecht zu werden. Aber auch solche Produkte, die bereits als fertiges Endprodukt gewonnen werden, kommen in dieser kompakten Form den Verwendungszwecken besonders entgegen.

Das erhaltene Konzentrat wird hauptsächlich als Futtermittel oder Futtermittelzusatz verwendet. Es kann jedoch auch für Menschen eingesetzt werden.

Das erfindungsgemässe Konzentrat enthält 20 bis 60 Teile, vorzugsweise 30 bis 50 Teile und am meisten bevorzugt 35 bis 45 Teile, Trockenmasse, die aus Hefeflüssigkeit stammt, und 30 bis 60 Teile, vorzugsweise 35 bis 55 Teile und am meisten bevorzugt 40 bis 50 Teile, Troclenmasse, die aus Milchnebenprodukten stammt, und 5 bis 25 Teile, vorzugsweise 5 bis 20 Teile und am meisten bevorzugt 10 bis 15 Teile, Trockenmasse, die aus Stärkeprodukten stammt. Das erfindungsgemässe Konzentrat kann mindestens 5 Teile Trockenmasse, die aus Stärkeprodukten stammt, enthalten, sonst stösst man bei der Endtrocknung des Produkts überraschenderweise auf Schwierigkeiten. Enthält das erfindungsgemässe Konzentrat weniger als 5 Teile Trockenmasse, die aus Stärkeprodukten stammt, lässt es sich nicht zu einem Granulat trocknen.

Das erfindungsgemässe Konzentrat kann weiter 0 bis 15 Teile, vorzugsweise 5 bis 10 Teile, Trockenmasse enthalten, die aus Cellulose und/oder rohfaserreichen Produkten stammt.

Das erfindungsgemässe Konzentrat kann weiterhin 0 bis 25 Teile, vorzugsweise 5 bis 10 Teile und am meisten bevorzugt 7 Teile, Trockenmasse, die aus Fermentationsprodukten, insbesondere Vinassen, stammt, und 0 bis 20 Teile, vorzugsweise 5 bis 15 Teile und am meisten bevorzugt 10 Teile, Trockenmasse, die aus Schlempen, Pulpen oder Hydrolysaten stammt, enthalten.

Soll das erfindungsgemässe Konzentrat für Menschen verwendet werden, so ist es bevorzugt, dass die beiden letztgenannten Bestandteile, d.h. die Trockenmasse, die aus Fermentationsprodukten, insbesondere Vinassen, stammt, und die Trockenmasse, die aus Schlempen, Pulpen oder Hydrolysaten stammt, nicht in dem Konzentrat vorhanden sind. Bei der Verwendung des erfindungsgemässen Konzentrats für Menschen sind Schlempen und Vinassen weniger geeignet.

Das erfindungsgemässe Nährkonzentrat besitzt überraschenderweise einen sehr hohen Nährwert. Durch die hohen Anteile an Vitaminen des B-Komplexes, organischen Mineral- und Spurenstoffen, Enzymsubstanzen und eine Reihe weiterer Wirkfaktoren, die als «UG-Faktoren» (Unidentified-Growth-Faktoren) beschrieben werden, den hohen Eiweissgehalt usw. lässt sich das erfindungsgemässe Nährkonzentrat bestens zur Verfütterung an Wiederkäuer und monogastrische Tiere verwenden. Es ist auch als Ergänzungsfutter gut geeignet. Durch Variation von Art und Menge der eingesetzten Hefeflüssigkeit und der anderen Bestandteile kann das erfindungsgemässe Nährkonzentrat auf den jeweiligen Verwendungszweck, insbesondere Fütterungszweck, und auf eine bestimmte Tierart genau abgestimmt werden. Die optimale Art und Zusammensetzung des Nährkonzentrats kann in Vorversuchen leicht ermittelt werden.

Ein sehr entscheidender Vorteil des erfindungsgemässen Verfahrens und Konzentrats ist darin zu sehen, dass es möglich wird, die riesigen Mengen der bei der industriellen Fermentation anfallenden Hefeflüssigkeiten und die grossen Mengen an anderen Neben- und Nachprodukten einer wirtschaftlichen Verwertung zuzuführen. Das erfindungsgemässe Verfahren kann so zur Beseitigung von Abfallhefe in grossem Masse dienen, d.h. erfindungsgemäss gelingt es, überschüssige Hefeflüssigkeiten nutzbringend zu beseitigen, wobei eine Mehrbelastung des Abwassers oder eine Umweltverschmutzung oder Kosten verursachende Massnahmen zur anderweitigen Beseitigung vermieden werden.

Futtermittel werden heute hinsichtlich ihrer bedarfsgerechten Zusammensetzung durch elektronische Rechenverfahren optimiert. Dadurch ist es möglich, das erfindungsgemässe Nährkonzentrat bedarfsgerecht und je nach Tierart und in Abhängigkeit von den praktischen Verhältnissen einzusetzen.

Das erfindungsgemässe Konzentrat zeigt überraschenderweise einen angenehmen Geschmack, eine hohe Bekömmlichkeit, es enthält die UG-Faktoren und weitere Wirkkomponenten und kann auch als Diätetikum verwendet werden.

Die in der obigen Tabelle I aufgeführten Stoffe aus der Milchzuckermelasse, dem Kartoffeleiweiss und dem Fermentationsrückstand, wie zum Beispiel Lysin, Calcium, Kalium, können in dem erfindungsgemässen Nährkonzentrat analytisch nachgewiesen werden, und sie tragen wesentlich dazu bei, dass das erfindungsgemässe Nährkonzentrat einen hohen Nährwert aufweist.

Das erfindungsgemässe Produkt fällt im allgemeinen als Granulat an. Je nach Art der Endtrocknung kann man ein grobkörniges oder feinkörniges Granulat herstellen.

In der folgenden Tabelle V sind die Bandbreiten der Inhaltsstoffe der erfindungsgemässen Nährkonzentrate, bezogen auf 100 Teile Trockenmasse im Endprodukt, angegeben.

Tabelle V

|  | allgemein | Beispiel 1 | Beispiel 2 |
|---|---|---|---|
| Rohprotein | 25–40 | 34 | 32 |
| Lysin | 1–3 | 2,5 | 2,2 |
| Meth + Cystin | 0–3 | 1,5 | 1,3 |
| Rohfett | 1–9 | 3,7 | 2,5 |
| Rohasche | 5–20 | 15,0 | 17,0 |
| Calcium | 2–8 | 3,7 | 2,0 |
| Phosphor | 1–7 | 1,4 | 1,3 |
| Natrium | 0,1–7 | 4,0 | 3,0 |
| Kalium | 1–9 |  | 2,9 |
| Zucker | 0–35 | 18,0 | 20,0 |
| Stärke | 4–10 | 4,0 | 5,0 |
| Betain | 0–9 |  | 0,9 |

Erfindungsgemäss wird zwischen Konzentration und Endtrocknung ein Mischwerk zwischengeschaltet, und dadurch ist es möglich, dem erfindungsgemässen Nährkonzentrat irgendwelche an sich bekannten Zusätze, wie Antibiotika, Fermente, Hormone, Spurenelemente, Mineralien, Vitamine, Pharmazeutika, Konservierungsmittel, zuzusetzen. Wie oben ausgeführt, enthalten die bei dem erfindungsgemässen Verfahren verwendeten Ausgangslösungen jedoch ausreichend Vitamine, Spurenelemente usw., so dass ein solches Zumischen im allgemeinen nicht erforderlich ist.

Versuche bezüglich der Schnellautolyse haben gezeigt, dass überraschenderweise nicht nur der gezielte Zusatz von Natriumchlorid zur Autolyse der Hefe führen kann, sondern auch die Versetzung von Milchnebenprodukten, die bereits als Konzentrat den angelieferten Hefen zugesetzt werden. Insbesondere sind die Nachprodukte der Milchzuckerei wirksam, die infolge ihrer hohen osmotischen Wirksamkeit (als Auswirkung der Konzentration bei Vorliegen von Milchzucker und löslichen Mineralsalzen) einen schnellen Aufschluss der Hefezellen ermöglichen.

Die folgenden Beispiele erläutern die Erfindung.

Beispiel 1

410 kg rohe Hefeflüssigkeit mit einem Trockengehalt von 11% werden in einer Hefe-Eindampfungsvorrichtung bis zu einem Trockengehalt von 28% entsprechend 160 kg eingedampft. Dies entspricht einer Wasserentfernung von 250 kg.

104 kg Zuckermelasse mit einem Trockenmassegehalt von 48% sowie 5 kg feste Stärke werden dem Hefeflüssigkeitskonzentrat beigemischt. Man erhält so 269 kg Reaktionsprodukt.

Die 269 kg Reaktionsprodukt werden auf eine Walzentrocknungsanlage geleitet und bis zu einem Endtrockmassengehalt von 90% eingedampft.

Man erhält ein Produkt, das 45% Trockenmasse, die aus Hefeflüssigkeit stammt, 50% Trockenmasse, die aus Milchzuckermelasse stammt, 5% Trockenmasse, die aus Stärke stammt, enthält.

In der folgenden Tabelle VI sind die Ergebnisse dieses Beispiels zusammen mit den Trocknungskosten in DM je 100 kg Trocknungsmasse aufgeführt.

Tabelle VI

| Produkt-zusammen-setzung in % TS | Kombinations-rohstoffe | Massen in kg | Wasserent-fernung kg | Trocknungs-kosten DM (je 100 kg TS) |
|---|---|---|---|---|
| 45 | Hefe, roh 11% TS | 410 | | |
| | daraus Konzentrat (Eindampfung Hefe-Eindampfer) | | | |
| | 28% TS | 160 | 250 | 3,25 |
| 50 | Milchzuckermelasse | | | |
| | 48% TS | 104 | | |
| 5 | Stärkezusatz | 5 | | |
| 100 | Nassgutvorlage vor Trocknung | 269 | | |
| | daraus Endprodukt (Walzentrocknung) | | | |
| | 90% TS | 110 | 159 | 23,85 27,10 |

**Beispiel 2**

Das obige Beispiel 1 wird wiederholt, mit der Ausnahme, dass anstelle von104 kg Milchzuckermelasse 104 kg Permeat mit einer Trockenmasse von 48% verwendet werden.

Man erhält analoge Ergebnisse, wobei die Trocknungskosten je 100 kg Trockenmasse ebenfalls DM 27,10 betragen.

Bei den obigen Beispielen 1 und 2 kann die Hefe nur über traditionelle Hefeeindampfungsanlagen bis sie maximal eine 28% Trockenmasse ergeben, konzentriert werden. Daher werden Molkenpro-dukte mit 48% Trockenmassenkonzentration ver-wendet. Die Kosten für die Wasserentfernung entsprechen in Tabelle II aufgeführten Kosten.

**Beispiel 3**

Dieses Beispiel erläutert die günstigen Ergebnisse, die man erhält, wenn die Hefeflüssigkeit infolge günstiger Standortlage über milchindu-strielle Eindampfungsanlagen konzentriert wer-den kann. Die Kosten für die Wasserentfernung entsprechen denen gemäss Tabelle II.

320 kg Hefeflüssigkeit mit einem Trockengehalt von 11% werden mit 145 kg Milchzuckermelasse mit einem Trockengehalt von 35% vermischt.

Die Mischung wird bis zu einem Trockengehalt von 40% entsprechend 210 kg oder einer Wasserentfernung von 255 kg eingedampft.

Zu dem Vorkonzentrat gibt man 5 kg Stärke, 11 kg Vinasse mit einem Trockengehalt von 65% sowie 3 kg α-Cellulose. Man erhält so 229 kg Re-aktionsprodukt, das auf einer Walzentrocknungs-anlage zu einer Trockenmasse von 90% getrocknet wird.

In der folgenden Tabelle sind die Ergebnisse dieses Beispiels zusammen mit den Trocknungs-kosten aufgeführt.

Tabelle VII

| Produktzu-sammenset-zung in % TS | Kombinations-rohstoffe | Massen in kg | Wasserent-fernung kg | Trocknungsko-sten DM (je 100 kg TS) |
|---|---|---|---|---|
| 35 | Hefe, roh 11% TS | 320 | | |
| 50 | Milchzucker-melasse oder Permeat 35% TS | 145 | | |
| | daraus Konzen-trat 40% TS | 210 | 255 | 3,32 |
| 5 | Stärkezusatz | 5 | | |
| 7 | Vinasse (65% TS) | 11 | | |
| 3 | α-Cellulose | 3 | | |

Tabelle VII   (Fortsetzung)

| Produktzu-sammenset-zung in % TS | Kombinations-rohstoffe | Massen in kg | Wasserent-fernung kg | Trocknungsko-sten DM (je 100 kg TS) |
|---|---|---|---|---|
| 100 | Nassgutvorlage vor Trocknung | 229 | | |
| | daraus Endprodukt (Walzentrocknung) 90% TS | 110 | 120 | 18,00 / 21,32 |

Aus den obigen Beispielen folgt, dass erfindungsgemässe gegenüber den traditionellen Hefetrocknungsverfahren ein ganz wesentlicher wirtschaftlicher Fortschritt erzielt werden kann, der hier als Verminderung der Trocknungskosten deutlich wird. Gegenüber dem besten Ergebnis von Tabelle II mit DM 44,65/100 kg Trockenmasse wird in Beispiel 1 eine Kostenerniedrigung auf 60% und in Beispiel 2 sogar auf 50% erreicht.

Die Trocknungskosten machen zugleich deutlich: die Verschiebung des Wasserentzugs in der Eindampfung mit Hilfe verfahrenstechnischer Mittel und der neuartigen Kombination mit weiteren Zumischstoffen; die Anhebung der Trockensubstanz im Nassgut vor der Walze und die Zugabe von Mischstoffen ermöglichen die Herstellung eines Nährkonzentrats auf billige und einfache Weise.

**Patentansprüche**

1. Verfahren zur Herstellung eines für Menschen und Tiere geeigneten Konzentrats aus Hefeflüssigkeit, dadurch gekennzeichnet, dass man eine Hefeflüssigkeit mit oder ohne Zugabe einer Lösung oder Suspension von Neben- und Nachprodukten der Milchindustrie, Stärkeindustrie, industriellen Fermentation und Nahrungsmittelindustrie zu einem Vorkonzentrat mit einer Trockenmasse von 16 bis 50% eindampft, dem Vorkonzentrat geeignete Rohstoffe zumischt, um die Konzentration des Vorkonzentrats in den Bereich von 35 bis 60% Trockenmasse anzuheben, wobei man als geeignete Rohstoffe feste Neben- oder Nachprodukte der Milchindustrie, der Stärkeindustrie, der Brennerei, der Fermentationsindustrie und/oder der Nahrungsmittelindustrie und/oder Stärkeprodukte verwendet, und das erhaltene Reaktionsgemisch bis zu einem Feststoffgehalt über 80% Trockenmasse trocknet, wobei die Vermischung auf solche Weise geschieht, dass ein Nährkonzentrat erhalten wird, welches, bezogen auf 100 Teile Trockenmasse, enthält:

a) 20 bis 60 Teile Trockenmasse, die aus Hefeflüssigkeit stammt, und

b) 30 bis 60 Teile Trockenmasse, die aus Milchnebenprodukten stammt, und

c) 5 bis 25 Teile Trockenmasse, die aus Stärkeprodukten stammt, sowie gegebenenfalls

d) bis zu 15 Teile Trockenmasse, die aus Cellulose und/oder rohfaserreichen Produkten stammt, und/oder

e) bis zu 25 Teile Trockenmasse, die aus Fermentationsprodukten stammt, und/oder

f) bis zu 20 Teile Trockenmasse, die aus Schlempen, Pulpen oder Hydrolysaten stammt.

2. Verfahren nach Anspruch 1, dadurch gekennzeichnet, dass man zu der Hefeflüssigkeit vor der Eindampfung 0,4 bis 2% Säure oder Ammoniumpropionat zumischt, das Gemisch sedimentieren lässt und die als Sediment vorliegende angereicherte Hefeflüssigkeit mit einer Trockenmasse von 20 bis 23% und das Serum trennt und gegebenenfalls die angereicherte Hefeflüssigkeit mit oder ohne Zugabe einer Lösung oder Suspension von Neben- und Nachprodukten der Milchindustrie, Stärkeindustrie, industriellen Fermentation und Nahrungsmittelindustrie zu einem Vorkonzentrat mit einer Trockenmasse bis 50% eindampft und dann dem Vorkonzentrat die geeigneten Rohstoffe zumischt.

3. Verfahren nach Anspruch 2, dadurch gekennzeichnet, dass man als Säure Ameisensäure, Schwefelsäure, Salzsäure, Propionsäure, Phosphorsäure, Essigsäure oder Methylpropionsäure beimischt.

4. Verfahren nach mindestens einem der Ansprüche 1, 2 oder 3, dadurch gekennzeichnet, dass die Hefeflüssigkeit unter Zugabe von Milchzuckermelassen, Permeaten, Molken, Vinassen, Schlempen, eiweisshaltigen Hydrolysaten oder ihren Gemischen eingedampft wird.

5. Verfahren nach einem der Ansprüche 1, 2, 3 oder 4, dadurch gekennzeichnet, dass man als Stärkeprodukte Kartoffelflocken oder Getreidemehl verwendet.

6. Verfahren nach mindestens einem der Ansprüche 1, 2, 3, 4 oder 5, dadurch gekennzeichnet, dass die Konzentration der Hefeflüssigkeit in einer Fallstromverdampferanlage erfolgt.

7. Verfahren nach mindestens einem der Ansprüche 1 bis 6, dadurch gekennzeichnet, dass man das Produkt bis zu einem Feststoffgehalt von 88 bis 98% trocknet.

8. Für Menschen und Tiere geeignetes Konzentrat aus Hefeflüssigkeit, dadurch gekennzeichnet, dass es, bezogen auf 100 Teile Trockenmasse, enthält:

a) 20 bis 60 Teile Trockenmasse, die aus Hefeflüssigkeit stammt, und

b) 30 bis 60 Teile Trockenmasse, die aus Milch-nebenprodukten, vorzugsweise Milchzuckerme-lassen, Permeaten und/oder Molken, stammt, und

c) 5 bis 25 Teile Trockenmasse, die aus Stärke-produkten, vorzugsweise Kartoffelflocken und Ge-treidemehlen, stammt, sowie gegebenenfalls

d) bis zu 15 Teilen Trockenmasse, die aus Cellulose und/oder rohfaserreichen Produkten stammt, und/oder

e) bis zu 25 Teile Trockenmasse, die aus Fermentationsprodukten, vorzugsweise Vinassen, stammt, und/oder

f) bis zu 20 Teile Trockenmasse, die aus Schlempen, Pulpen oder Hydrolysaten stammt.

9. Verwendung des Konzentrats gemäss Anspruch 8 oder 9 als Nahrungs- oder Futtermittel oder als Nahrungsmittel- oder Futtermittelzusatz.

## Revendications

1. Procédé de préparation d'un concentré de levure liquide convenant à l'homme et aux animaux, caractérisé en ce que l'on concentre par évaporation une levure liquide, avec ou sans addition d'une solution ou d'une suspension de sous-produits intermédiaires ou finaux de l'industrie laitière, de l'industrie de l'amidon, de la fermentation industrielle et de l'industrie alimentaire, pour obtenir un préconcentré avant une masse sèche de 16 à 50% en ce que l'on mélange au préconcentré des matières premières appropriées pour élever la concentration du préconcentré dans la gamme de 35 à 60% de masse sèche, en utilisant comme matières premières appropriées des sous-produits intermédiaires ou finaux solides de l'industrie laitière, de l'industrie de l'amidon, de la distillerie, de l'industrie de la fermentation et/ou de l'industrie alimentaire et/ou des produits amylacés et en ce que l'on sèche le mélange réactionnel obtenu jusqu'à une teneur en solides supérieure à 80% de masse sèche, le mélange s'effectuant de façon telle que l'on obtienne un concentré nutritif qui, rapporté à 100 parties de masse sèche, contient:

a) 20 à 60 parties de masse sèche qui provient de levure liquide et

b) 30 à 60 parties de masse sèche qui provient de sous-produits laitiers, et

c) 5 à 25 parties de masse sèche qui provient de produits amylacés, ainsi qu'éventuellement,

d) jusqu'à 15 parties de masse sèche qui provient de cellulose et/ou de produits riches en fibres brutes, et/ou

e) jusqu'à 25 parties de masse sèche qui provient de produits de fermentation, et/ou

f) jusqu'à 20 parties de masse sèche qui provient de vinasses de pulpes ou d'hydrolysats.

2. Procédé selon la revendication 1, caractérisé en ce qu'on mélange à la levure liquide, avant la concentration par évaporation, 0,4 à 2% d'acide ou de propionate d'ammonium, en ce qu'on laisse déposer le mélange et en ce qu'on sépare la levure liquide enrichie, présente sous forme de sédiment et ayant une masse sèche de 20 à 23%, et le sérum, et en ce qu'on concentre éventuellement la levure liquide enrichie, par évaporation, avec ou sans addition d'une solution ou d'une suspension de sous-produits intermédiaires ou finaux de l'industrie laitière, de l'industrie de l'amidon, de la fermentation industrielle et de l'industrie alimentaire, pour obtenir un préconcentré ayant une masse sèche allant jusqu'à 50%, puis en ce qu'on mélange au préconcentré les matières premières appropriées.

3. Procédé selon la revendication 2, caractérisé en ce que l'on incorpore, comme acide, l'acide formique, l'acide sulfurique, l'acide chlorhydrique, l'acide propionique, l'acide phosphorique, l'acide acétique ou l'acide méthylpropionique.

4. Procédé selon au moins une des revendications 1, 2 ou 3, caractérisé en ce qu'l'on concentre par évaporation la levure liquide en lui ajoutant des mélasses de lactose, des perméats, du petit-lait, des vinasses, des drêches, des hydrolysats protidiques ou leurs mélanges.

5. Procédé selon l'une des revendications 1, 2, 3 ou 4, caractérisé en ce qu'on utilise comme produits amylacés, des flocons de pommes de terre ou de la farine de céréales.

6. Procédé selon au moins une des revendications 1, 2, 3, 4 ou 5, caractérisé en ce que la concentration de la levure liquide s'effectue dans un évaporateur à courant descendant.

7. Procédé selon au moins une des revendications 1 à 6, caractérisé en ce que l'on sèche le produit jusqu'à une teneur en solides de 88 à 98%.

8. Concentré de levure liquide convenant à l'homme et aux animaux, caractérisé en ce qu'il contient, rapporté à 100 parties de masse sèche:

a) 20 à 60 parties de masse sèche qui provient de levure liquide et

b) 30 à 60 parties de masse sèche qui provient de sous-produits laitiers, de préférence de mélasses le lactose, de perméats et/ou de petit-lait, et

c) 5 à 25 parties de masse sèche qui provient de produits amylacés, de préférence de flocons de pommes de terre et de farines de céréales, ainsi qu'éventuellement,

d) jusqu'à 15 parties de masse sèche qui provient de cellulose et/ou de produits riches en fibres brutes, et/ou

e) jusqu'à 25 parties de masse sèche qui provient de produits de fermentation, de préférence de vinasses, et/ou

f) jusqu'à 20 parties de masse sèche qui provient de vinasses ou de drêches, de pulpes ou d'hydrolysats.

9. Utilisation du concentré selon l'une des revendications 8 ou 9 comme aliment pour l'homme ou les animaux ou comme additif pour aliments pour l'homme ou les animaux.

## Claims

1. A process for the production of a concentrate of liquid yeast fit for consumption by humans and animals, characterised in that a liquid yeast is concentrated by evaporation in the presence or absence of a solution or suspension of by-products and secondary products from the milk industry, starch industry, industrial fermentation and food industry to form a preconcentrate containing from 16 to 50% of dry matter, suitable raw materials are added to the preconcentrate to increase the concentration of the preconcentrate to between 35 and 60% of dry matter, the raw materials used being solid by-products or secondary products from the milk industry, starch industry, distilleries, the fermentation industry and/or the food industry and/or starch products, and the reaction mixture obtained is dried to a solids content equivalent to more than 80% of dry matter, mixing being carried out in such a way that a food concentrate is obtained which, per 100 parts of dry matter contains:

a) from 20 to 60 parts of dry matter emanating from liquid yeast,

b) from 30 to 60 parts of dry matter emanating from milk by-products,

c) from 5 to 25 parts of dry matter emanating from starch products and optionally

d) up to 15 parts of dry matter emanating from cellulose and/or products rich in raw fibres and/or

e) up to 25 parts of dry matter emanating from fermentation products and/or

f) up to 20 parts of dry matter emanating from slops, pulps or hydrolysates.

2. A process as claimed in Claim 1, characterised in that from 0.4 to 2% of acid or ammonium propionate is added to the liquid yeast before concentration by evaporation, the mixture is left to sediment and the enriched liquid yeast containing from 20 to 23% of dry matter obtained as sediment and the serum are separated and, optionally, the enriched liquid yeast is concentrated by evaporation in the presence or absence of a solution or suspension of by-products and secondary products from the milk industry, the starch industry, industrial fermentation and the food industry to form a preconcentrate containing up to 50% of dry matter, after which suitable raw materials are added to and mixed with the preconcentrate.

3. A process as claimed in Claim 2, characterised in that formic acid, sulfuric acid, hydrochloric acid, propionic acid, phosphoric acid, acetic acid or methyl propionic acid is added as the acid.

4. A process as claimed in at least one of Claims 1, 2 and 3, characterised in that the liquid yeast is concentrated by evaporation in the presence of lactose molasses, permeates, whey, vinasses, slops, protein-containing hydrolysates or mixtures thereof.

5. A process as claimed in one of Claims 1, 2, 3 or 4, characterised in that potato flakes or ground cereals are used as the starch products.

6. A process as claimed in at least one of Claims 1, 2, 3, 4 or 5, characterised in that the liquid yeast is concentrated in a falling film evaporator.

7. A process as claimed in at least one of Claims 1 to 6, characterised in that the products is dried up to a solids content of from 88 to 98%.

8. A concentrate of liquid yeast fit for human and animal consumption, characterised in that it contains per 100 parts of dry matter:

a) from 20 to 60 parts of dry matter emanating from liquid yeast,

b) from 30 to 60 parts of dry matter emanating from milk by-products, preferably lactose molasses, permeates and/or whey,

c) from 5 to 25 parts of dry matter emanating from starch products, preferably potato flakes and ground cereals and, optionally,

d) up to 15 parts of dry matter emanating from cellulose and/or products rich in raw fibres and/or

e) up to 25 parts of dry matter emanating from fermentation products, preferably vinasses, and/or

f) up to 20 parts of dry matter emanating from slops, pulps or hydrolysates.

9. Use of the concentrate as claimed in claim 8 or 9 as article of food or fodder or as additive to article of food or fodder.